(19) Europäisches Patentamt
European Patent Office
Office européen des brevets

(11) **EP 2 273 663 B1**

(12) **FASCICULE DE BREVET EUROPEEN**

(45) Date de publication et mention de la délivrance du brevet:
**26.11.2014 Bulletin 2014/48**

(51) Int Cl.:
***H02M 7/487*** (2007.01)

(21) Numéro de dépôt: **10305755.0**

(22) Date de dépôt: **07.07.2010**

(54) **Dispositif de conversion d'une tension continue d'entrée en une tension alternative de sortie, et procédé de commande d'un interrupteur d'un tel dispositif**

Vorrichtung zur Umwandlung einer Gleichstrom-Eingangsspannung in eine Wechselstrom-Ausgangsspannung, und Steuerverfahren eines Schalters an einer solchen Vorrichtung

Device for converting a direct input voltage to an alternating output voltage, and control method of a switch for such a device

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **07.07.2009 FR 0954694**

(43) Date de publication de la demande:
**12.01.2011 Bulletin 2011/02**

(73) Titulaire: **GE Energy Power Conversion Technology Limited**
**Rugby**
**Warwickshire CV21 1BU (GB)**

(72) Inventeurs:
• **Gollentz, Bernard**
**68360 Soultz (FR)**
• **Flury, Guy**
**68210 Balschwiller (FR)**
• **Terrien, Franck**
**90000 Belfort (FR)**
• **Leleu, Emmanuel**
**70400 Chalonvillars (FR)**

(74) Mandataire: **Serjeants LLP**
**25 The Crescent**
**King Street**
**Leicester, LE1 6RX (GB)**

(56) Documents cités:
**JP-A- 2004 173 349    US-A1- 2006 245 216**

• **MIRANDA H ET AL: "A dq0 passivity-based approach for 3Ï four-wire shunt active power filter based on NPC three-level converter" INDUSTRIAL ELECTRONICS, 2008. IECON 2008. 34TH ANNUAL CONFERENCE OF IEEE, IEEE, PISCATAWAY, NJ, USA, 10 novembre 2008 (2008-11-10), pages 3171-3177, XP031410934 ISBN: 978-1-4244-1767-4**
• **JUN LI ET AL: "Performance comparison of a new current regulator for 3-level NPC inverter for sinusoidal and non-sinusoidal current tracking applications" INDUSTRIAL ELECTRONICS, 2008. IECON 2008. 34TH ANNUAL CONFERENCE OF IEEE, IEEE, PISCATAWAY, NJ, USA, 10 novembre 2008 (2008-11-10), pages 879-884, XP031410558 ISBN: 978-1-4244-1767-4**

**Description**

La présente invention concerne un dispositif de conversion d'une tension continue d'entrée en une tension alternative de sortie comportant au moins une phase, du type comprenant :

-   deux bornes d'entrée, et une borne de sortie pour la ou chaque phase,
-   un premier condensateur présentant une première tension continue à ses bornes et un deuxième condensateur présentant une deuxième tension continue à ses bornes, les deux condensateurs étant connectés en série entre les deux bornes d'entrée, et reliés entre eux par un point de référence,
-   pour chaque borne de sortie :

    •   deux branches de commutation, chacune étant connectée entre ladite borne de sortie et une borne d'entrée respective, chaque branche de commutation comprenant deux interrupteurs électroniques connectés en série, et reliés entre eux par un point milieu,
    •   deux diodes, chacune étant connectée entre le point de référence et un point milieu respectif, la première ayant une anode reliée au point de référence et une cathode reliée au point milieu respectif, et la seconde ayant une anode reliée au point milieu respectif et une cathode reliée au point de référence,

-   des moyens de commande desdits interrupteurs électroniques propres à envoyer des signaux de commande auxdits interrupteurs,

un courant de référence étant propre à circuler entre le point de référence et l'ensemble des points milieux.

L'invention concerne également un ensemble comprenant une machine électrique, un système d'alimentation de la machine électrique relié à un bus de circulation d'un courant continu d'entrée, et comportant un tel dispositif de conversion.

L'invention concerne également un procédé de commande d'un interrupteur électronique d'un tel dispositif de conversion.

Un dispositif de conversion du type précité est également appelé onduleur à trois niveaux du type clampé par le neutre, désigné par l'acronyme anglais NPC pour « Neutral Point-Clamped ». Lorsque le point de référence n'est pas relié à une masse électrique, le bon fonctionnement du dispositif de conversion nécessite que les première et deuxième tensions continues soient sensiblement égales, et il est donc nécessaire de corriger un éventuel déséquilibre entre la première tension continue et la deuxième tension continue.

Il est alors connu d'agencer une résistance électrique en parallèle de chacun des premier et deuxième condensateurs, ces résistances étant choisies afin d'avoir une première tension continue et une deuxième tension continue sensiblement égales. Cependant, chaque résistance électrique entraîne des pertes permanentes par effet Joule, ce qui contribue à diminuer le rendement du dispositif de conversion.

On connaît alors du document EP 1 544 994 un dispositif de conversion du type précité dans lequel un hacheur est agencé en parallèle de chacun des premier et deuxième condensateurs. Une commande adéquate de ces hacheurs permet de rééquilibrer les valeurs des première et deuxième tensions continues, lorsqu'un déséquilibre entre ces première et deuxième tensions est détecté, tout en préservant le rendement du dispositif de conversion.

Toutefois, un tel dispositif de conversion nécessite la présence de deux hacheurs supplémentaires, engendrant une augmentation importante des coûts.

On connaît du document US 2006/0245216 A1 un dispositif de conversion selon le préambule de la revendication 1.

Le but de l'invention est de proposer un dispositif de conversion permettant d'équilibrer les valeurs des première et deuxième tensions continues, tout en limitant l'augmentation des coûts.

A cet effet, l'invention a pour objet un dispositif de conversion selon la revendication 1.

Suivant d'autres modes de réalisation, le dispositif de conversion comprend une ou plusieurs des caractéristiques suivantes, prises isolément ou suivant toutes les combinaisons techniquement possibles, selon les revendications dépendantes 2 à 5.

L'invention a également pour objet un ensemble selon la revendication 6.

L'invention a également pour objet un procédé de commande selon la revendication 7.

Suivant d'autres modes de réalisation, le procédé de commande comprend une ou plusieurs des caractéristiques suivantes, prises isolément ou suivant toutes les combinaisons techniquement possibles, selon les revendications dépendantes 8 à 10.

-   la figure 1 est un schéma électrique d'un dispositif de conversion selon l'invention, et
-   la figure 2 est un schéma équivalent d'un interrupteur du dispositif de conversion de la figure 1.

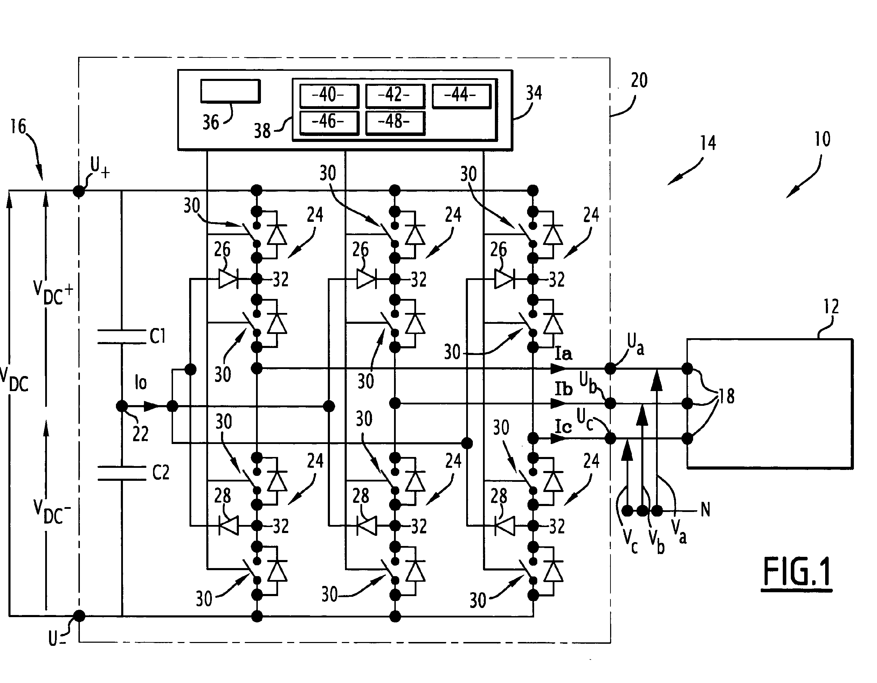

Sur la figure 1, un ensemble 10 comprend une machine électrique 12 et un système 14 d'alimentation de la machine 12, relié à un bus 16 de circulation d'un courant continu d'entrée.

La machine électrique 12 est, par exemple, un moteur électrique triphasé comportant trois bornes d'entrée 18. Le moteur électrique 12 est, par exemple, un moteur synchrone. En variante, le moteur 12 est un moteur asynchrone.

Le système d'alimentation 14 comporte un dispositif 20 de conversion d'une tension continue d'entrée $V_{DC}$ du bus d'entrée 16 en une tension alternative triphasée de sortie.

Le dispositif de conversion 20 comprend deux bornes d'entrée $U_+$, $U_-$ et trois bornes de sortie $U_a$, $U_b$, $U_c$, chaque borne de sortie correspondant à une phase respective de la tension triphasée de sortie. Chaque borne de sortie $U_a$, $U_b$, $U_c$ est reliée à une borne d'entrée 18 respective du moteur. Les tensions des trois phases de la tension triphasée de sortie sont respectivement notées $V_a$, $V_b$ et $V_c$, chaque tension de phase $V_a$, $V_b$, $V_c$ étant mesurée entre une borne de neutre N et la borne de sortie $U_a$, $U_b$, $U_c$ correspondante. Les intensités des courants circulant à travers les bornes de sortie $U_a$, $U_b$, $U_c$ sont respectivement notées $I_a$, $I_b$ et $I_c$.

Le dispositif de conversion 20 comprend un premier condensateur C1 et un deuxième condensateur C2 connectés en série entre les deux bornes d'entrée $U_+$, $U_-$, et reliés entre eux par un point de référence 22. Le premier condensateur C1 présente à ses bornes une première tension continue $V_{DC+}$ et le deuxième condensateur C2 présente à ses bornes une deuxième tension continue $V_{DC-}$. La première tension continue $V_{DC+}$ et la deuxième tension continue $V_{DC-}$ sont orientées dans le même sens. Les valeurs des capacités des deux condensateurs C1, C2 sont, par exemple, identiques.

Le dispositif de conversion 20 comprend, pour chaque borne de sortie $U_a$, $U_b$, $U_c$, deux branches de commutation 24, une première diode 26 et une deuxième diode 28.

Chaque branche de commutation 24 est connectée entre la borne de sortie $U_a$, $U_b$ $U_c$ correspondante et une borne d'entrée $U_+$, $U_-$ respective. Chaque branche de commutation 24 comprend deux interrupteurs électroniques 30 connectés en série, et reliés entre eux par un point milieu 32. Les interrupteurs électroniques 30 sont, par exemple, des interrupteurs bidirectionnels connectés dans le même sens.

Chaque diode 26, 28 est connectée entre le point de référence 22 et un point milieu 32 respectif. Chaque première diode 26 a son anode reliée au point de référence 22 et sa cathode reliée au point milieu 32 respectif. Chaque seconde diode 28 a son anode reliée au point milieu 32 respectif, et sa cathode reliée au point de référence 22. Un courant de référence $I_0$ est propre à circuler depuis le point de référence 22 vers l'ensemble des diodes 26,28.

Le dispositif de conversion 20 comprend des moyens 34 de commande des interrupteurs électroniques 30 propres à envoyer des signaux de commande auxdits interrupteurs 30.

Les moyens de commande 34 sont reliés à chacun des interrupteurs électroniques 30. Les moyens de commande 34 comportent une unité de traitement d'informations formée, par exemple, d'un processeur de données 36 associé à une mémoire 38. La mémoire 38 est apte à stocker une pluralité de modulations de largeur d'impulsions, un logiciel 40 de sélection d'une modulation parmi la pluralité de modulations de largeur d'impulsions, un logiciel 42 de calcul des signaux de commande en fonction de la modulation sélectionnée de largeur d'impulsions, et un logiciel 44 de modification des signaux de commande en fonction de la différence entre la valeur de la première tension continue $V_{DC+}$ et celle de la deuxième tension continue $V_{DC-}$. La mémoire 38 est également apte à stocker un logiciel 46 d'application des signaux de commande aux interrupteurs électroniques 30 respectifs, et un logiciel 48 de commutation d'une modulation de largeur d'impulsions à une autre modulation de largeur d'impulsions en fonction, par exemple, d'un signal de mesure de la vitesse de rotation du moteur 12.

En variante, les moyens de sélection 40, les moyens de calcul 42, les moyens de modification 44, les moyens d'application 46 et les moyens de commutation 48 sont réalisés sous forme de composants logiques programmables ou encore sous forme de circuits intégrés dédiés.

Les moyens de modification 44 sont propres à modifier les signaux de commande, et notamment leur durée, pour l'ajout d'une tension homopolaire $V_h$ de manière simultanée à chaque tension de phase $V_a$, $V_b$, $V_c$ respective, normalement calculée. La tension homopolaire $V_h$ comporte, par exemple, une première composante homopolaire $V_{hPWM}$ de détermination du type de modulation de largeur d'impulsions sélectionnée et une seconde composante homopolaire d'équilibrage $V_{hBal}$ des première et deuxième tensions continues $V_{DC+}$, $V_{DC-}$.

Les moyens de modification 44 sont propres à modifier l'intensité du courant de référence $I_0$ lorsque la valeur de la première tension continue $V_{DC+}$ est différente de celle de la deuxième tension continue $V_{DC-}$, afin de réduire la différence entre la valeur de la première tension continue $V_{DC+}$ et celle de la deuxième tension continue $V_{DC-}$.

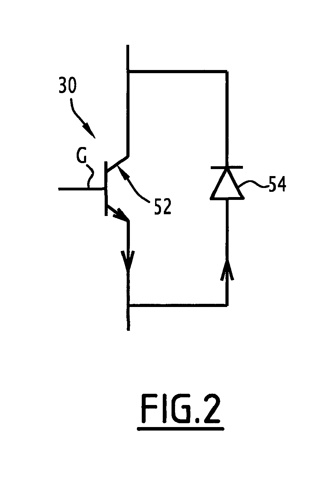

Dans l'exemple de réalisation de la figure 2, l'interrupteur électronique 30 est un interrupteur bidirectionnel en courant et unidirectionnel en tension. L'interrupteur électronique 30 comprend un transistor 52 et une diode 54 connectée en antiparallèle assurant ainsi des trajets de circulation bidirectionnels de courant lorsque le transistor 52 est passant. Le transistor 52 est, par exemple, un transistor bipolaire à grille isolée, également appelé transistor IGBT (de l'anglais Insulated Gate Bipolar Transistor). Les deux composants électroniques 52, 54 sont unidirectionnels en tension. Un tel assemblage permet de créer un bloc bidirectionnel en courant mais unidirectionnel en tension.

Chaque transistor 52 comporte une grille G reliée aux moyens de commande 34, visibles sur la figure 1, pour recevoir le signal de commande correspondant.

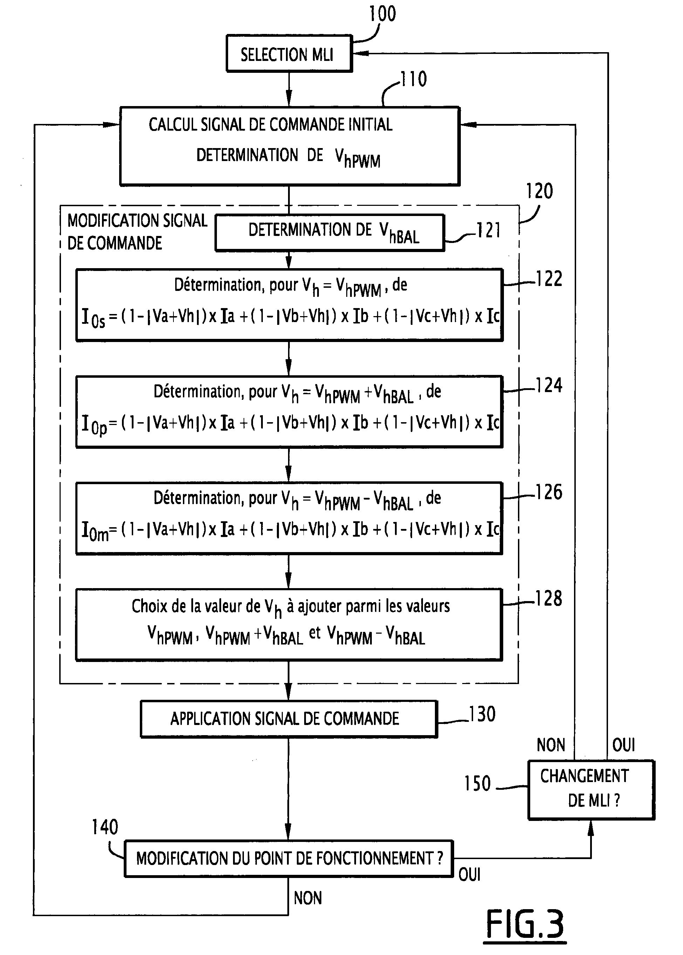

La figure 3 illustre un procédé de commande des interrupteurs électroniques 30 du dispositif de conversion.

A l'étape 100, les moyens de sélection 40 déterminent la modulation de largeur d'impulsions correspondant à la valeur reçue de la vitesse mesurée du moteur 12, parmi une première modulation de largeur d'impulsions H3, une deuxième modulation de largeur d'impulsions GDPWM et une troisième modulation de largeur d'impulsions TOGGLE.

La première modulation de largeur d'impulsions H3 permet d'augmenter l'amplitude de la tension de sortie, dans un rapport de 15% par exemple.

La deuxième modulation de largeur d'impulsions GDPWM permet de réduire les pertes par commutation en relaxant les transistors IGBT 52 pendant une certaine portion du cycle de commande, par exemple pendant un sixième du cycle.

La troisième modulation de largeur d'impulsions TOGGLE permet de répartir uniformément entre tous les transistors IGBT 52 les pertes à faibles fréquences statoriques.

A l'étape 110, les moyens de calcul 42 déterminent un signal de commande initial en fonction de la modulation de largeur d'impulsions sélectionnée. Les moyens de calcul 42 déterminent une valeur initiale de la première composante homopolaire $V_{hPWM}$ de détermination du type de modulation de largeur d'impulsions sélectionnée.

Lorsque la modulation de largeur d'impulsions sélectionnée est la première modulation de largeur d'impulsions H3, la première composante homopolaire $V_{hPWM}$ est déterminée en calculant la valeur maximale Val_MAX des tensions de phase $V_a$, $V_b$, $V_c$, la valeur minimale Val_Min des tensions de phase $V_a$, $V_b$, $V_c$, ainsi que la valeur MODULE du module des tensions de phase $V_a$, $V_b$, $V_c$. Si la somme des valeurs Val_MAX et Val_Min est strictement positive, alors la première composante homopolaire $V_{hPWM}$ est égale à la différence de la valeur MODULE moins la valeur Val_MAX. Sinon, la première composante homopolaire $V_{hPWM}$ est égale à l'opposé de la somme des valeurs MODULE et Val_Min. Autrement dit, pour la première modulation de largeur d'impulsions H3, la première composante homopolaire $V_{hPWM}$ est déterminée à l'aide de l'algorithme suivant :

$$\text{Si (Val\_MAX + Val\_Min)} > 0, \text{ alors } V_{hPWM} = \text{MODULE - Val\_MAX}$$

$$\text{Sinon } V_{hPWM} = -(\text{MODULE + Val\_Min})$$

Lorsque la modulation de largeur d'impulsions sélectionnée est la deuxième modulation de largeur d'impulsions GDPWM, la première composante homopolaire $V_{hPWM}$ est égale à 1- Val_MAX si la somme des valeurs Val_MAX et Val_Min est strictement positive, et à l'opposé de (1 + Val_Min) sinon. Autrement dit, pour la deuxième modulation de largeur d'impulsions GDPWM, la première composante homopolaire $V_{hPWM}$ est déterminée à l'aide de l'algorithme suivant :

$$\text{Si (Val\_MAX + Val\_Min)} > 0, \text{ alors } V_{hPWM} = 1\text{- Val\_MAX}$$

$$\text{Sinon } V_{hPWM} = -(1 + \text{Val\_Min})$$

Lorsque la modulation de largeur d'impulsions sélectionnée est la troisième modulation de largeur d'impulsions TOGGLE, la première composante homopolaire $V_{hPWM}$ est un signal carré d'amplitude égale à +/- $V_{DC}/2$ et de fréquence égale à la moitié de la fréquence de la troisième modulation de largeur d'impulsions TOGGLE.

A l'étape 120, les moyens de modification 44 modifient le signal de commande initial, afin de réduire la différence entre la valeur de la première tension continue $V_{DC+}$ et celle de la deuxième tension continue $V_{DC}$-. Dans l'exemple de réalisation de la figure 3, les signaux de commande sont des impulsions électriques, et les moyens de modification 44 modifient la durée desdites impulsions. La modification des impulsions comprend l'ajout de la tension homopolaire $V_h$ de manière simultanée à chaque tension de phase $V_a$, $V_b$, $V_c$ respective, normalement calculée lors de l'étape 110.

L'ajout de la tension homopolaire $V_h$ comprend cinq étapes 121, 122, 124, 126 et 128.

La première étape 121 est la détermination de la seconde composante homopolaire d'équilibrage $V_{hBal}$.

Lorsque la modulation de largeur d'impulsions sélectionnée est la première modulation de largeur d'impulsions H3, la seconde composante homopolaire d'équilibrage $V_{hBal}$ est déterminée à l'aide de l'équation suivante :

$$V_{hBal} = MAX\{0; MIN[V_{io};(1 - MAX(V_a + V_{hPWM}; V_b + V_{hPWM}; V_c + V_{hPWM}))]\} \quad (1)$$

où Vio est une constante prédéterminée.

Lorsque la modulation de largeur d'impulsions sélectionnée est la deuxième modulation de largeur d'impulsions GDPWM, la seconde composante homopolaire d'équilibrage $V_{hBal}$ est déterminée à l'aide de l'équation suivante :

$$V_{hBal} = V_{io} \quad\quad\quad (2)$$

Lorsque la modulation de largeur d'impulsions sélectionnée est la troisième modulation de largeur d'impulsions TOGGLE, la seconde composante homopolaire d'équilibrage $V_{hBal}$ est égale à la première composante homopolaire $V_hPWM$.

La deuxième étape 122 est la détermination d'une première valeur $I_{0s}$ du courant de référence $I_0$ pour une première valeur $V_{hs}$ de la tension homopolaire $V_h$ égale à la première composante homopolaire $V_{hPWM}$ de détermination du type de modulation de largeur d'impulsions sélectionnée. La première valeur $I_{0s}$ du courant de référence est calculée à l'aide de l'équation suivante :

$$I_{0s} = (1 - |Va + V_{hPWM}|).Ia + (1 - |Vb + V_{hPWM}|).Ib + (1 - |Vc + V_{hPWM}|).Ic \quad (3)$$

La troisième étape 124 est la détermination d'une deuxième valeur $I_{0p}$ du courant de référence $I_0$ pour une deuxième valeur $V_{hp}$ de la tension homopolaire $V_h$ égale à la somme de la première composante homopolaire $V_{hPWM}$ et de la seconde composante homopolaire d'équilibrage $V_{hBal}$ des première et deuxième tensions $V_{DC+}$, $V_{DC-}$. La deuxième valeur $I_{0p}$ du courant de référence est calculée à l'aide de l'équation suivante :

$$I_{0p} = (1 - |Va + V_{hPWM} + V_{hBal}|).Ia + (1 - |Vb + V_{hPWM} + V_{hBal}|).Ib + (1 - |Vc + V_{hPWM} + V_{hBal}|).Ic \quad (4)$$

La quatrième étape 126 de l'ajout de la tension homopolaire $V_h$ est la détermination d'une troisième valeur $I_{0m}$ du courant de référence pour une troisième valeur $V_{hm}$ de la tension homopolaire $V_h$ égale à la différence entre la première composante $V_{hPWM}$ et la seconde composante $V_{hBal}$. La troisième valeur $I_{0m}$ du courant de référence est calculée à l'aide de l'équation suivante :

$$I_{0m} = (1 - |Va + V_{hPWM} - V_{hBal}|).Ia + (1 - |Vb + V_{hPWM} - V_{hBal}|).Ib + (1 - |Vc + V_{hPWM} - V_{hBal}|).Ic \quad (5)$$

La cinquième étape 128 est le choix de la valeur de la tension homopolaire $V_h$ à ajouter. Lorsque la valeur de la première tension continue $V_{DC+}$ est supérieure à celle de la deuxième tension continue $V_{DC-}$, on détermine la valeur minimale du courant de référence $I_0$ parmi les trois valeurs $I_{0s}$, $I_{0p}$, $I_{0m}$ précédemment calculées, et on choisit la valeur qui parmi les première, deuxième et troisième valeurs $V_{hs}$, $V_{hp}$, $V_{hm}$ de la tension homopolaire $V_h$ correspond à la valeur minimale du courant de référence $I_0$. Lorsque la valeur de la première tension continue $V_{DC+}$ est inférieure à celle de la deuxième tension continue $V_{DC-}$, on détermine la valeur maximale du courant de référence $I_0$ parmi les trois valeurs $I_{0s}$, $I_{0p}$, $I_{0m}$ précédemment calculées, et on choisit la valeur qui parmi les première, deuxième et troisième valeurs $V_{hs}$, $V_{hp}$, $V_{hm}$ de la tension homopolaire $V_h$ correspond à la valeur maximale du courant de référence $I_0$.

Les moyens d'application 46 appliquent alors, lors de l'étape 130, les signaux de commande modifiés aux interrupteurs 30 correspondants du dispositif de conversion.

A l'étape 140, les moyens de commutation 48 déterminent si le point de fonctionnement du moteur 12 a varié. Cette variation du point de fonctionnement du moteur 12 résulte, par exemple, d'une variation de la vitesse mesurée du moteur 12, d'une variation du taux de modulation de la modulation de largeur d'impulsions, d'une variation de la puissance active du moteur 12, ou encore de la fréquence du fondamental de la tension de sortie. En cas de variation du point de fonctionnement du moteur 12, les moyens de commutation 48 passent à l'étape 150, où le changement éventuel de modulation de largeur d'impulsions est déterminé en fonction de la variation du point de fonctionnement du moteur 12. En l'absence de variation du point de fonctionnement du moteur 12 à l'étape 140, le procédé retourne à l'étape 110.

Ainsi, le dispositif de conversion selon l'invention permet de réguler les première et deuxième tensions continues $V_{DC+}$, $V_{DC-}$ en modifiant de manière adéquate les impulsions de commande des interrupteurs électroniques. L'ajout de manière simultanée de la tension homopolaire à chaque phase respective de la tension triphasée de sortie permet de modifier la durée de ces impulsions de commande, tout en ne perturbant pas le courant $I_a$, $I_b$, $I_c$ délivré pour chacune des phases, et consommé par le moteur.

On conçoit ainsi que le dispositif de conversion selon l'invention permet d'équilibrer les première et deuxième tensions continues sans ajouter de composants, ce qui limite l'augmentation des coûts.

L'homme du métier comprendra que l'invention s'applique plus généralement à un dispositif de conversion 20 bidirectionnel. Autrement dit, la machine électrique 12 est en variante un générateur électrique propre à délivrer une tension alternative comportant au moins une phase $V_a$, $V_b$, $V_c$ aux bornes respectives Ua, Ub, Uc, le dispositif de conversion 20 étant alors propre à convertir cette tension alternative d'entrée en une tension continue de sortie délivrée aux bornes U+, U- du bus 16.

L'homme du métier comprendra que l'invention s'applique plus généralement à un onduleur 20 de tension polyphasée propre à alimenter un moteur polyphasé 12.

## Revendications

1. Dispositif (20) de conversion d'une tension continue d'entrée ($V_{DC}$) en une tension alternative de sortie comportant au moins une phase ($V_a$, $V_b$, $V_c$), du type comprenant :

   - deux bornes d'entrée ($U_+$, $U_-$), et une borne de sortie ($U_a$, $U_b$, $U_c$) pour la ou chaque phase ($V_a$, $V_b$, $V_c$),
   - un premier condensateur (C1) présentant une première tension continue ($V_{DC+}$) à ses bornes et un deuxième condensateur (C2) présentant une deuxième tension continue ($V_{DC}$-) à ses bornes, les deux condensateurs (C1, C2) étant connectés en série entre les deux bornes d'entrée ($U_+$, $U_-$), et reliés entre eux par un point de référence (22),
   - pour chaque borne de sortie ($U_a$, $U_b$, $U_c$) :

      • deux branches de commutation (24), chacune étant connectée entre ladite borne de sortie ($U_a$, $U_b$, $U_c$) et une borne d'entrée ($U_+$, $U_-$) respective, chaque branche de commutation (24) comprenant deux interrupteurs électroniques (30) connectés en série, et reliés entre eux par un point milieu (32),
      • deux diodes (26, 28), chacune étant connectée entre le point de référence (22) et un point milieu (32) respectif, la première (26) ayant une anode reliée au point de référence (22) et une cathode reliée au point milieu (32) respectif, et la seconde (28) ayant une anode reliée au point milieu (32) respectif et une cathode reliée au point de référence (22),

   - des moyens (34) de commande desdits interrupteurs électroniques (30) propres à envoyer des signaux de commande auxdits interrupteurs (30),

   un courant de référence ($I_0$) étant propre à circuler entre le point de référence (22) et l'ensemble des points milieux (32),
   des moyens (44) de modification desdits signaux de commande propres à réduire la différence entre la valeur de la première tension continue ($V_{DC+}$) et celle de la deuxième tension continue ($V_{DC-}$),
   **caractérisé en ce que** lesdits moyens de modification (44) sont propres à modifier les signaux de commande pour l'ajout d'une tension homopolaire ($V_h$) à la ou chaque phase ($V_a$, $V_b$, $V_c$) de la tension alternative de sortie.

2. Dispositif (20) selon la revendication 1, **caractérisé en ce que** les signaux de commande sont des impulsions électriques, et **en ce que** lesdits moyens de modification (44) sont propres à modifier la durée desdites impulsions de commande.

3. Dispositif (20) selon l'une quelconque des revendications précédentes, **caractérisé en ce que** lesdits moyens de modification (44) sont propres à modifier l'intensité du courant de référence ($I_o$), lorsque la valeur de la première tension continue ($V_{DC+}$) est différente de celle de la deuxième tension continue ($V_{DC-}$).

4. Dispositif (20) selon l'une quelconque des revendications précédentes, **caractérisé en ce que** chaque interrupteur électronique (30) est bidirectionnel, et comprend un transistor (52) et une diode (54) connectée en anti-parallèle.

5. Dispositif (20) selon la revendication 4, **caractérisé en ce que** le transistor (52) est un transistor IGBT.

6. Ensemble (10) du type comprenant une machine électrique (12), un système (14) d'alimentation de la machine (12) relié à un bus (16) de circulation d'un courant continu d'entrée, **caractérisé en ce que** le système d'alimentation (14) comporte un dispositif de conversion (20) selon l'une quelconque des revendications 1 à 5.

7. Procédé de commande d'un interrupteur électronique (30) d'un dispositif (20) de conversion d'une tension continue d'entrée ($V_{DC}$) en une tension alternative de sortie comportant au moins une phase ($V_a$, $V_b$, $V_c$), comprenant :

- deux bornes d'entrée ($U_+$, $U_-$), et une borne de sortie ($U_a$, $U_b$, $U_c$) pour la ou chaque phase ($V_a$, $V_b$, $V_c$),
- un premier condensateur (C1) présentant une première tension continue ($V_{DC+}$) à ses bornes et un deuxième condensateur (C2) présentant une deuxième tension continue ($V_{DC-}$) à ses bornes, les deux condensateurs (C1, C2) étant connectés en série entre les deux bornes d'entrée ($U_+$, $U_-$), et reliés entre eux par un point de référence (22),
- pour chaque borne de sortie ($U_a$, $U_b$, $U_c$) :

  • deux branches de commutation (24), chacune étant connectée entre ladite borne de sortie ($U_a$, $U_b$, $U_c$) et une borne d'entrée ($U_+$, $U_-$) respective, chaque branche de commutation (24) comprenant deux interrupteurs électroniques (30) connectés en série, et reliés entre eux par un point milieu (32),
  • deux diodes (26,28), chacune étant connectée entre le point de référence (22) et un point milieu (32) respectif, la première (26) ayant une anode reliée au point de référence (22) et une cathode reliée au point milieu (32) respectif, et la seconde (28) ayant une anode reliée au point milieu (32) respectif et une cathode reliée au point de référence (22),

- des moyens (34) de commande desdits interrupteurs électroniques (30) propres à envoyer des signaux de commande auxdits interrupteurs (30),

un courant de référence ($I_0$) étant propre à circuler entre le point de référence (22) et l'ensemble des points milieux (32),
le procédé comprenant :

- la modification (120) des signaux de commande, afin de réduire la différence entre la valeur de la première tension continue ($V_{DC+}$) et celle de la deuxième tension continue ($V_{DC-}$), et
- l'application (130) des signaux de commande modifiés auxdits interrupteurs électroniques (30) respectifs,

**caractérisé en ce que** la modification des signaux (120) comprend l'ajout d'une tension homopolaire ($V_h$) à la ou chaque phase ($V_a$, $V_b$, $V_c$) de la tension alternative de sortie.

8. Procédé selon la revendication 7, **caractérisé en ce que** les signaux de commande sont des impulsions électriques, et **en ce que** la modification des signaux de commande (120) est une modification de la durée desdites impulsions.

9. Procédé selon la revendication 7 ou 8, **caractérisé en ce que** l'ajout de la tension homopolaire ($V_h$) comprend les étapes suivantes :

- la détermination d'une première valeur ($I_{0s}$) du courant de référence ($I_o$) pour une première valeur ($V_{hs}$) de la tension homopolaire ($V_h$) égale à une première composante homopolaire ($V_{hPWM}$) de détermination du type de modulation de largeur d'impulsions choisie, à l'aide de l'équation suivante :

$$I_{0s} = (1 - |Va + V_{hPWM}|).Ia + (1 - |Vb + V_{hPWM}|).Ib + (1 - |Vc + V_{hPWM}|).Ic$$

où Ia, Ib, Ic représentent l'intensité respective du courant pour la ou chaque phase ($V_a$, $V_b$, $V_c$) de la tension alternative de sortie,
- la détermination d'une deuxième valeur ($I_{0p}$) du courant de référence ($I_o$) pour une deuxième valeur ($V_{hp}$) de

la tension homopolaire ($V_h$) égale à la somme de la première composante homopolaire ($V_{hPWM}$) et d'une seconde composante homopolaire d'équilibrage ($V_{hBal}$) des première et deuxième tensions ($V_{DC+}$, $V_{DC-}$), à l'aide de l'équation suivante :

$$I_{0p} = (1 - |Va + V_{hPWM} + V_{hBal}|).Ia + (1 - |Vb + V_{hPWM} + V_{hBal}|).Ib + (1 - |Vc + V_{hPWM} + V_{hBal}|).Ic$$

- la détermination d'une troisième valeur ($I_{0m}$) du courant de référence ($I_0$) pour une troisième valeur ($V_{hm}$) de la tension homopolaire ($V_h$) égale à la différence entre la première composante ($V_{hPWM}$) et la seconde composante ($V_{hBal}$), à l'aide de l'équation suivante :

$$I_{0m} = (1 - |Va + V_{hPWM} - V_{hBal}|).Ia + (1 - |Vb + V_{hPWM} - V_{hBal}|).Ib + (1 - |Vc + V_{hPWM} - V_{hBal}|).Ic$$

- lorsque la valeur de la première tension continue ($V_{DC+}$) est supérieure à celle de la deuxième tension continue ($V_{DC-}$), la détermination de la valeur minimale du courant de référence ($I_o$) parmi les trois valeurs précédemment déterminées ($I_{0s}$, $I_{0p}$, $I_{0m}$) et le choix de la valeur parmi les première, deuxième et troisième valeurs ($V_{hs}$, $V_{hp}$, $V_{hm}$) de la tension homopolaire ($V_h$) correspondant à la valeur minimale du courant de référence ($I_o$), et
- lorsque la valeur de la première tension continue ($V_{DC+}$) est inférieure à celle de la deuxième tension continue ($V_{DC-}$), la détermination de la valeur maximale du courant de référence ($I_o$) parmi les trois valeurs précédemment déterminées ($I_{0s}$, $I_{0p}$, $I_{0m}$) et le choix de la valeur parmi les première, deuxième et troisième valeurs ($V_{hs}$, $V_{hp}$, $V_{hm}$) de la tension homopolaire ($V_h$) correspondant à la valeur maximale du courant de référence ($I_o$).

**10.** Procédé selon la revendication 9, **caractérisé en ce que** :

- lorsque la modulation de largeur d'impulsions sélectionnée est une première modulation de largeur d'impulsions (H3), la seconde composante homopolaire d'équilibrage ($V_{hBal}$) est déterminée à l'aide de l'équation suivante :

$$V_{hBal} = MAX\{0; MIN[V_{io}; (1 - MAX(V_a + V_{hPWM}; V_b + V_{hPWM}; V_c + V_{hPWM}))]\}$$

où $V_{io}$ est une constante prédéterminée,
- lorsque la modulation de largeur d'impulsions sélectionnée est une deuxième modulation de largeur d'impulsions (GDPWM), la seconde composante homopolaire d'équilibrage ($V_{hBal}$) est déterminée à l'aide de l'équation suivante :

$$V_{hBal} = V_{io}$$

- lorsque la modulation de largeur d'impulsions sélectionnée est une troisième modulation de largeur d'impulsions (TOGGLE), la seconde composante homopolaire d'équilibrage ($V_{hBal}$) est égale à la première composante homopolaire ($V_{hPWM}$).

**Patentansprüche**

**1.** Vorrichtung zur Umwandlung einer Eingangsgleichspannung ($V_{DC}$) in eine Ausgangswechselspannung, die mindestens eine Phase ($V_a$, $V_b$, $V_c$) aufweist, des Typs aufweisend:

- zwei Eingangsanschlüsse ($U_+$, $U_-$) und einen Ausgangsanschluss ($U_a$, $U_b$, $U_c$) für die oder jede Phase ($V_a$, $V_b$, $V_c$),
- einen ersten Kondensator (C1), der an seinen Anschlüssen eine erste Gleichspannung ($V_{DC+}$) bereitstellt und einen zweiten Kondensator (C2), der an seinen Anschlüssen eine zweite Gleichspannung ($V_{DC-}$) bereitstellt, wobei die beiden Kondensatoren (C1, C2) in Serie zwischen die beiden Eingangsanschlüsse ($U_+$, $U_-$) geschaltet sind und untereinander über einen Referenzpunkt (22) verbunden sind,
- für jeden Ausgangsanschluss ($U_a$, $U_b$, $U_c$):

• zwei Kommutierungszweige (24), von denen jeder zwischen den Ausgangsanschluss ($U_a$, $U_b$, $U_c$) und einen jeweiligen Eingangsanschluss ($U_+$, $U_-$) geschaltet ist, wobei jeder Kommutierungszweig (24) zwei elektronische Schalter (30) aufweist, die in Serie geschaltet sind und miteinander über einen Mittelpunkt (32) verbunden sind,
• zwei Dioden (26, 28), von denen jede zwischen den Referenzpunkt (22) und einen jeweiligen Mittelpunkt (32) geschaltet ist, wobei die erste (26) eine mit dem Referenzpunkt (22) verbundene Anode und eine mit dem jeweiligen Mittelpunkt (32) verbundene Kathode aufweist und die zweite (28) eine mit dem jeweiligen Mittelpunkt (32) verbundene Anode und eine mit dem Referenzpunkt (22) verbundene Kathode aufweist,

- Steuermittel (34) für die elektronischen Schalter (30), die dazu eingerichtet sind, Steuersignale an die Schalter (30) zu übermitteln,

wobei ein Referenzstrom ($I_0$) dazu vorgesehen ist, zwischen dem Referenzpunkt (22) und der Anordnung der Mittelpunkte (32) zu fließen,
Modifikationsmittel (44) für die Steuersignale, die dazu eingerichtet sind, die Differenz zwischen dem Wert der ersten Gleichspannung ($V_{DC+}$) und dem der zweiten Gleichspannung ($V_{DC-}$) zu verringern,
**dadurch gekennzeichnet, dass** die Modifikationsmittel (44) dazu eingerichtet sind, die Steuersignale zu modifizieren, um der oder jeder Phase ($V_a$, $V_b$, $V_c$) der Ausgangswechselspannung eine Nullspannung ($V_h$) hinzuzufügen.

2. Vorrichtung (20) nach Anspruch 1, **dadurch gekennzeichnet, dass** die Steuersignale elektrische Impulse sind und dadurch, und dadurch, dass die Modifikationsmittel (44) dazu eingerichtet sind, die Dauer dieser Steuerimpulse zu modifizieren.

3. Vorrichtung (20) nach einem der vorhergehenden Ansprüche, **dadurch gekennzeichnet, dass** die Modifikationsmittel (44) dazu eingerichtet sind, die Stärke des Referenzstromes ($I_0$) zu modifizieren, wenn der Wert der ersten Gleichspannung ($V_{DC+}$) sich von demjenigen der zweiten Gleichspannung ($V_{DC-}$) unterscheidet.

4. Vorrichtung (20) nach einem der vorhergehenden Ansprüche, **dadurch gekennzeichnet, dass** jeder elektronische Schalter (30) bidirektional ist und einen Transistor (52) und eine Diode (54) aufweist, die antiparallel geschaltet sind.

5. Vorrichtung (20) nach Anspruch 4, **dadurch gekennzeichnet, dass** der Transistor (52) ein IGBT-Transistor ist.

6. Anordnung (10) des Typs aufweisend eine elektrische Maschine (12), ein Versorgungssystem (14) für die Maschine (12), das mit einem Bus (16) für das Fließen eines Eingangsgleichstroms verbunden ist, **dadurch gekennzeichnet, dass** das Versorgungssystem (14) eine Vorrichtung (20) zum Wandeln nach einem der Ansprüche 1 bis 5 aufweist.

7. Verfahren zum Steuern eines elektronischen Schalters (30) einer Vorrichtung (20) zum Wandeln einer Eingangsgleichspannung ($V_{DC}$) in eine mindestens eine Phase ($V_a$, $V_b$, $V_c$) aufweisende Ausgangswechselspannung, aufweisend:

- zwei Eingangsanschlüsse ($U_+$, $U_-$) und einen Ausgangsanschluss ($U_a$, $U_b$, $U_c$) für die oder jede Phase ($V_a$, $V_b$, $V_c$),
- einen ersten Kondensator (C1), der an seinen Anschlüssen eine erste Gleichspannung ($V_{DC+}$) bereitstellt, und einen zweiten Kondensator (C2), der an seinen Anschlüssen eine zweite Gleichspannung ($V_{DC-}$) bereitstellt, wobei die beiden Kondensatoren (C1, C2) zwischen den Eingangsanschlüssen ($U_+$, $U_-$) in Reihe geschaltet sind und untereinander über einen Referenzpunkt (22) verbunden sind,
- für jeden Ausgangsanschluss ($U_a$, $U_b$, $U_c$):

• zwei Kommutierungszweige (24), wobei jeder zwischen den Ausgangsanschluss ($U_a$, $U_b$, $U_c$) und einen jeweiligen Eingangsanschluss ($U_+$, $U_-$) geschaltet ist, wobei jeder Kommutierungszweig (24) zwei elektronische Schalter (30) aufweist, die in Reihe geschaltet sind und untereinander über einen Mittelpunkt (32) verbunden sind,
• zwei Dioden (26, 28), wobei jede zwischen den Referenzpunkt (22) und einen jeweiligen Mittelpunkt (32) geschaltet ist, wobei die erste (26) eine mit dem Referenzpunkt (22) verbundene Anode und eine mit dem jeweiligen Mittelpunkt (32) verbundene Kathode aufweist und die zweite (28) eine mit dem jeweiligen Mittelpunkt (32) verbundene Anode und eine mit dem Referenzpunkt (22) verbundene Kathode aufweist,

- Steuermittel (34) für die elektronischen Schalter (30), die dazu eingerichtet sind, Steuersignale an die Schalter (30) zu übermitteln,

wobei ein Referenzstrom ($I_o$) dazu vorgesehen ist, zwischen dem Referenzpunkt (22) und der Anordnung der Mittelpunkte (32) zu fließen,
wobei das Verfahren aufweist:

- das Modifizieren (120) der Steuersignale, um die Differenz zwischen dem Wert der ersten Gleichspannung ($V_{DC+}$) und dem der zweiten Gleichspannung ($V_{DC-}$) zu reduzieren, und
- Aufbringen (130) der modifizierten Steuersignale auf die jeweiligen elektronischen Schalter (30),

**dadurch gekennzeichnet, dass** die Modifikation der Signale (120) das Hinzufügen einer Nullspannung ($V_h$) zu der oder jeder Phase ($V_a$, $V_b$, $V_c$) der Ausgangswechselspannung aufweist.

8. Verfahren nach Anspruch 7, **dadurch gekennzeichnet, dass** die Steuersignale elektrische Impulse sind, und dadurch, dass die Modifikation der Steuersignale (120) eine Modifikation der Dauer der Impulse ist.

9. Verfahren nach Anspruch 7 oder 8, **dadurch gekennzeichnet, dass** das Hinzufügen der Nullspannung ($V_h$) die folgenden Schritte aufweist:

- Bestimmen eines ersten Wertes ($I_{os}$) des Referenzstromes ($I_o$) für einen ersten Wert ($V_{hs}$) der Nullspannung ($V_h$), der gleich ist wie eine erste Nullkomponente ($V_{hPWM}$) der Bestimmung der Art der gewählten Modulation der Größe der Impulse mit Hilfe der folgenden Gleichung:

$$I_{0s} = (1 - |Va + V_{hPWM}|).Ia + (1 - |Vb + V_{hPWM}|).Ib + (1 - |Vc + V_{hPWM}|).Ic$$

wobei Ia, Ib, Ic die jeweilige Stromstärke für die oder jede Phase ($V_a$, $V_b$, $V_c$) der Ausgangswechselspannung darstellen,
- Bestimmen eines zweiten Wertes ($I_{op}$) des Referenzstromes ($I_o$) für einen zweiten Wert ($V_{hp}$) der Nullspannung ($V_h$) der gleich der Summe aus der ersten Nullkomponente ($V_{HPWM}$) und einer zweiten Ausgleichs-Nullkomponente ($V_{hBal}$) der ersten und der zweiten Spannung ($V_{DC+}$, $V_{DC-}$) ist, mit Hilfe der folgenden Gleichung:

$$I_{0p} = (1 - |Va + V_{hPWM} + V_{hBal}|).Ia + (1 - |Vb + V_{hPWM} + V_{hBal}|).Ib + (1 - |Vc + V_{hPWM} + V_{hBal}|).Ic$$

- Bestimmen eines dritten Wertes ($I_{om}$) des Referenzstromes ($I_o$) für einen dritten Wert ($V_{hm}$) der Nullspannung ($V_h$) der gleich der Differenz zwischen der ersten Komponente ($V_{HPWM}$) und der zweiten Komponente ($V_{hBal}$) ist, mit Hilfe der folgenden Gleichung:

$$I_{0m} = (1 - |Va + V_{hPWM} - V_{hBal}|).Ia + (1 - |Vb + V_{hPWM} - V_{hBal}|).Ib + (1 - |Vc + V_{hPWM} - V_{hBal}|).Ic$$

- Bestimmen des minimalen Wertes des Referenzstromes ($I_o$) unter den drei vorhergehend bestimmten Werten ($I_{os}$, $I_{op}$, $I_{om}$) und Auswählen des Wertes aus dem ersten, zweiten und dritten Wert ($V_{hs}$, $V_{hp}$, $V_{hm}$) der Nullspannung ($V_h$), die dem minimalen Wert des Referenzstromes entspricht ($I_o$), wenn der Wert der ersten Gleichspannung ($V_{DC+}$) größer ist als der der zweiten Gleichspannung ($V_{DC-}$), und
- Bestimmen des maximalen Wertes des Referenzstromes ($I_o$) aus den drei vorhergehend bestimmten Werten ($I_{os}$, $I_{op}$, $I_{om}$) und Auswählen des Wertes aus dem ersten, zweiten und dritten Wert ($V_{hs}$, $V_{hp}$, $V_{hm}$) der Nullspannung ($V_h$), der dem maximalen Wert des Referenzstromes ($I_o$) entspricht, wenn der Wert der ersten Gleichspannung (V$_{DC+}$) kleiner ist als der der zweiten Gleichspannung (V$_{DC-}$).

10. Verfahren nach Anspruch 9, **dadurch gekennzeichnet, dass**:

- wenn die gewählte Modulation der Größe der Impulse eine erste Modulation der Größe der Impulse (H3) ist, wird die zweite Ausgleichs-Nullkomponente (V$_{hBal}$) mit Hilfe der folgenden Gleichung bestimmt:

$$V_{hBal} = MAX\left\{0; MIN\left[V_{io}; \left(1 - MAX\left(V_a + V_{bPWM}; V_b + V_{bPWM}; V_c + V_{bPWM}\right)\right)\right]\right\}$$

wobei V$_{io}$ eine vorbestimmte Konstante ist,
- wenn die gewählte Modulation der Größe der Impulse eine zweite Modulation der Größe der Impulse ist (GDPWM), wird die zweite Ausgleichs-Nullkomponente (V$_{hBal}$) mit Hilfe der folgenden Gleichung bestimmt:

$$V_{hBal} = V_{io}$$

- wenn die gewählte Modulation der Größe der Impulse eine dritte Modulation der Größe der Impulse ist (TOGGLE) ist die zweite Ausgleichs-Nullkomponente (V$_{hBal}$) gleich der ersten Nullkomponente (V$_{hPWM}$).

**Claims**

1. Device (20) for converting a DC input voltage (V$_{DC}$) into an AC output voltage having at least one phase (V$_a$, V$_b$, V$_c$), of the type comprising:

- two input terminals (U+, U-) and one output terminal (U$_a$, U$_b$, U$_c$) for the or each phase (V$_a$, V$_b$, V$_c$),
- a first capacitor (C1) exhibiting a first DC voltage (V$_{DC+}$) at its terminals and a second capacitor (C2) exhibiting a second DC voltage (V$_{DC-}$) at its terminals, the two capacitors (C1, C2) being connected in series between the two input terminals (U$_+$, U$_-$), and being connected to one another by a reference point (22),
- for each output terminal (U$_a$, U$_b$, U$_c$):

  • two switching paths (24), each being connected between said output terminal (U$_a$, U$_b$, U$_c$) and a respective input terminal (U+, U$_-$), each switching path (24) comprising two electronic switches (30) connected in series, and connected to one another by a centre point (32),
  • two diodes (26, 28), each being connected between the reference point (22) and a respective centre point (32), the first (26) having an anode connected to the reference point (22) and a cathode connected to the respective centre point (32), and the second (28) having an anode connected to the respective centre point (32) and a cathode connected to the reference point (22),

- means (34) for controlling said electronic switches (30), which are suited to sending control signals to said switches (30),

a reference current (I$_0$) being likely to flow between the reference point (22) and all of the centre points (32), means (44) for modifying said control signals, which are suited to reducing the difference between the value of the first DC voltage (V$_{DC+}$) and that of the second DC voltage (V$_{DC-}$),
**characterized in that** said modification means (44) are suited to modifying the control signals to add a homopolar voltage (V$_h$) to the or each phase (V$_a$, V$_b$, V$_c$) of the AC output voltage.

2. Device (20) according to Claim 1, **characterized in that** the control signals are electrical pulses, and **in that** said modification means (44) are suited to modifying the duration of said control pulses.

3. Device (20) according to either of the preceding claims, **characterized in that** said modification means (44) are suited to modifying the level of the reference current (I$_0$) when the value of the first DC voltage (V$_{DC+}$) is different from that of the second DC voltage ($V_{DC-}$).

4. Device (20) according to any one of the preceding claims, **characterized in that** each electronic switch (30) is bidirectional and comprises a transistor (52) and a reverse-connected parallel diode (54).

5. Device (20) according to Claim 4, **characterized in that** the transistor (52) is an IGBT transistor.

6. Assembly (10) of the type comprising an electric machine (12) and a system (14) for supplying power to the machine (12), which system is connected to a bus (16) for a DC input current to flow, **characterized in that** the power supply system (14) has a conversion device (20) according to any one of Claims 1 to 5.

7. Method for controlling an electronic switch (30) of a device (20) for converting a DC input voltage ($V_{DC}$) into an AC output voltage having at least one phase ($V_a$, $V_b$, $V_c$), comprising:

   - two input terminals ($U_+$, $U_-$) and one output terminal ($U_a$, $U_b$, $U_c$) for the or each phase ($V_a$, $V_b$, $V_c$),
   - a first capacitor (C1) exhibiting a first DC voltage ($V_{DC+}$) at its terminals and a second capacitor (C2) exhibiting a second DC voltage ($V_{DC-}$) at its terminals, the two capacitors (C1, C2) being connected in series between the two input terminals ($U_+$, $U_-$), and connected to one another by a reference point (22),
   - for each output terminal ($U_a$, $U_b$, $U_c$):

      • two switching paths (24), each being connected between said output terminal ($U_a$, $U_b$, $U_c$) and a respective input terminal ($U_+$, $U_-$), each switching path (24) comprising two electronic switches (30) connected in series, and connected to one another by a centre point (32),
      • two diodes (26, 28), each being connected between the reference point (22) and a respective centre point (32), the first (26) having an anode connected to the reference point (22) and a cathode connected to the respective centre point (32), and the second (28) having an anode connected to the respective centre point (32) and a cathode connected to the reference point (22),

   - means (34) for controlling said electronic switches (30), which are suited to sending control signals to said switches (30),

   a reference current ($I_0$) being likely to flow between the reference point (22) and all of the centre points (32), the method comprising:

      - modification (120) of the control signals so as to reduce the difference between the value of the first DC voltage ($V_{DC+}$) and that of the second DC voltage ($V_{DC-}$), and
      - application (130) of the modified control signals to said respective electronic switches (30),

   **characterized in that** the modification of the signals (120) comprises the addition of a homopolar voltage ($V_h$) to the or each phase ($V_a$, $V_b$, $V_c$) of the AC output voltage.

8. Method according to Claim 7, **characterized in that** the control signals are electrical pulses, and **in that** the modification of the control signals (120) is modification of the duration of said pulses.

9. Method according to Claim 7 or 8, **characterized in that** the addition of the homopolar voltage ($V_h$) comprises the following steps:

   - determination of a first value ($I_{0s}$) of the reference current ($I_0$) for a first value ($V_{hs}$) of the homopolar voltage ($V_h$) that is equal to a first homopolar component ($V_{hPWM}$) for determining the type of pulse width modulation chosen, using the following equation:

$$I_{0s} = \left(1 - \left|Va + V_{hPWM}\right|\right).Ia + \left(1 - \left|Vb + V_{hPWM}\right|\right).Ib + \left(1 - \left|Vc + V_{hPWM}\right|\right).Ic$$

   where Ia, Ib, Ic are the respective level of the current for the or each phase ($V_a$, $V_b$, $V_c$) of the AC output voltage,
   - determination of a second value ($I_{0p}$) of the reference current ($I_0$) for a second value ($V_{hp}$) of the homopolar

voltage ($V_h$) that is equal to the sum of the first homopolar component ($V_{hPWM}$) and of a second, balancing homopolar component ($V_{hBal}$) of the first and second voltages ($V_{DC+}$, $V_{DC-}$), using the following equation:

$$I_{0p} = \left(1 - \left|Va + V_{hPWM} + V_{hBal}\right|\right)Ia + \left(1 - \left|Vb + V_{hPWM} + V_{hBal}\right|\right)Ib + \left(1 - \left|Vc + V_{hPWM} + V_{hBal}\right|\right)Ic$$

- determination of a third value ($I_{0m}$) of the reference current ($I_0$) for a third value ($V_{hm}$) of the homopolar voltage ($V_h$) that is equal to the difference between the first component ($V_{hPWM}$) and the second component ($V_{hBal}$), using the following equation:

$$I_{0m} = \left(1 - \left|Va + V_{hPWM} - V_{hBal}\right|\right)Ia + \left(1 - \left|Vb + V_{hPWM} - V_{hBal}\right|\right)Ib + \left(1 - \left|Vc + V_{hPWM} - V_{hBal}\right|\right)Ic$$

- when the value of the first DC voltage ($V_{DC+}$) is higher than that of the second DC voltage ($V_{DC-}$), determination of the minimum value of the reference current ($I_0$) from among the three previously determined values ($I_{0s}$, $I_{0p}$, $I_{0m}$) and choice of the value from among the first, second and third values ($V_{hs}$, $V_{hp}$, $V_{hm}$) of the homopolar voltage ($V_h$) corresponding to the minimum value of the reference current ($I_0$), and
- when the value of the first DC voltage ($V_{DC+}$) is lower than that of the second DC voltage ($V_{DC-}$), determination of the maximum value of the reference current ($I_0$) from among the three previously determined values ($I_{0s}$, $I_{0p}$, $I_{0m}$) and choice of the value from among the first, second and third values ($V_{hs}$, $V_{hp}$, $V_{hm}$) of the homopolar voltage ($V_h$) corresponding to the maximum value of the reference current ($I_0$).

**10.** Method according to Claim 9, **characterized in that**:

- when the selected pulse width modulation is a first pulse width modulation (H3), the second, balancing homopolar component ($V_{hBal}$) is determined using the following equation:

$$V_{hBal} = MAX\left\{0; MIN\left[V_{io}; \left(1 - MAX\left(V_a + V_{hPWM}; V_b + V_{hPWM}; V_c + V_{hPWM}\right)\right)\right]\right\}$$

where $V_{io}$ is a predetermined constant,
- when the selected pulse width modulation is a second pulse width modulation (GDPWM), the second, balancing homopolar component ($V_{hBal}$) is determined using the following equation:

$$V_{hBal} = V_{io}$$

- when the selected pulse width modulation is a third pulse width modulation (TOGGLE), the second, balancing homopolar component ($V_{hBal}$) is equal to the first homopolar component ($V_{hPWM}$).

FIG.1

## FIG.2

```
                        ┌──────────────┐  ╱100
                        │ SELECTION MLI│◄──────────────────┐
                        └──────┬───────┘                   │
                               │           ╱110            │
          ┌───────────────────▼──────────────────┐        │
          │  CALCUL SIGNAL DE COMMANDE INITIAL    │◄─────┐ │
          │  DETERMINATION DE  V_hPWM             │      │ │
          └───────────────────┬──────────────────┘      │ │
```

MODIFICATION SIGNAL DE COMMANDE — 120

DETERMINATION DE $V_{hBAL}$ — 121

Détermination, pour $V_h = V_{hPWM}$, de — 122

$$I_{0s} = (1-|Va+Vh|) \times Ia + (1-|Vb+Vh|) \times Ib + (1-|Vc+Vh|) \times Ic$$

Détermination, pour $V_h = V_{hPWM} + V_{hBAL}$, de — 124

$$I_{0p} = (1-|Va+Vh|) \times Ia + (1-|Vb+Vh|) \times Ib + (1-|Vc+Vh|) \times Ic$$

Détermination, pour $V_h = V_{hPWM} - V_{hBAL}$, de — 126

$$I_{0m} = (1-|Va+Vh|) \times Ia + (1-|Vb+Vh|) \times Ib + (1-|Vc+Vh|) \times Ic$$

Choix de la valeur de $V_h$ à ajouter parmi les valeurs $V_{hPWM}$, $V_{hPWM} + V_{hBAL}$ et $V_{hPWM} - V_{hBAL}$ — 128

APPLICATION SIGNAL DE COMMANDE — 130

NON   OUI

150 — CHANGEMENT DE MLI ?

140 — MODIFICATION DU POINT DE FONCTIONNEMENT ?

OUI

NON

FIG.3

## RÉFÉRENCES CITÉES DANS LA DESCRIPTION

**Documents brevets cités dans la description**

- EP 1544994 A
- US 20060245216 A1